# EUROPEAN PATENT APPLICATION

(11) **EP 2 747 520 A2**
(43) Date of publication of application: **25.06.2014**
(21) Application number: 13275138.9
(22) Date of filing: 07.06.2013
(51) Int. Cl.: H05B 33/08

(54) **Led driving device and power supply device including the same**

(30) Priority: 21.12.2012 KR 20120151468
(71) Applicant: Samsung Electro-Mechanics Co., Ltd, Suwon, Gyunggi-Do (KR)
(72) Inventor: Han, Sang Kyoo, Gyunggi-do (KR); Jang, Du Hee, Gyunggi-do (KR); Lee, Taek Sang, Gyunggi-do (KR); Kim, Jin Hwan, Gyunggi-do (KR); Choi, Heung Gyoon, Gyunggi-do (KR)
(74) Representative: Potter Clarkson LLP

(57) **Abstract**

There is provided an LED driving device, including: an input unit acquiring ballast output voltage, a bridge converter driving an LED load based on the ballast output voltage, and a limiting unit limiting the ballast output voltage applied to the LED driver.

## Description

### CROSS-REFERENCE TO RELATED APPLICATIONS

This application claims the priority of Korean Patent Application No. 10-2012-0151468 filed on December 21, 2012, in the Korean Intellectual Property Office, the disclosure of which is incorporated herein by reference.

### BACKGROUND OF THE INVENTION

### Field of the Invention

The present invention relates to an LED driving device compatible with a fluorescent lamp ballast and a power supply device including the same.

### Description of the Related Art

In general, a fluorescent lamp includes harmful materials, such as mercury, has a relatively short lifespan of 10,000 hours or less, and causes a severe eye fatigue due to low frequency flicker. On the other hand, a light emitting diode (LED) does not include harmful materials, excluding the risk of environmental pollution and has reduced low frequency flicker, due to high frequency driving.

In addition, the LED has very low power consumption on the level of about 75%, as compared with the fluorescent lamp, and a relatively long lifespan of 40,000 hours or more, such that the LED is anticipated to be a next-generation light source for lightings because it is eco-friendly and very suitable for use an era of high oil prices. As a result, research into an LED device and a driving circuit has recently been actively conducted.

In order to replace a fluorescent lamp with an LED lighting lamp, inconvenience and cost issues are present in the related art, due to the removal of all fluorescent lamp ballasts driven with alternating current (AC) voltage and the reinstallation of lighting facilities suitable for the LED lighting lamp to be driven with direct current (DC) voltage. Recently, as in the inventions disclosed in the prior art document, demand for a fluorescent lamp ballast compatible LED driving circuit able to be used by replacing a fluorescent lamp with the LED lighting lamp, without altering the already built lighting facilities has increased.

Meanwhile, the fluorescent lamp is equivalent to an open circuit before being discharged, and has a constant resistance value after being discharged due to high voltage applied to the fluorescent lamp. Therefore, at the time of the initial starting of a general electronic ballast for a fluorescent lamp, the general electronic ballast for a fluorescent lamp initiates normal operations when an output load is maintained in an open state for a predetermined period of time. Further, at the time of the initial starting of the electronic ballast for a fluorescent lamp, the general electronic ballast for a fluorescent lamp may not initiate normal operations when the output load is not in an open state for a predetermined period of time.

Therefore, in order for the fluorescent lamp ballast compatible LED driving circuit to stably start, the LED driving circuit does not consume power at the time of initial starting, unlike in the open circuit. However, at the time of the initial driving of the LED driving circuit according to the related art, peripheral circuits as well as an LED driver control IC consume several mW of power, such that the initial starting of the ballast may not be secured.

Therefore, a need exists for the introduction of an LED driving device compliable with a fluorescent lamp ballast and a power supply device including the same.

Patent Document 1, disclosed in the following related art document, relates to an LED dimming control circuit using an output of a fluorescent lamp dimming ballast and does not disclose a configuration for securing the initial starting of the ballast.

### [Related Art Document]

(Patent Document 1) Korean Patent Laid-Open Publication No. 2012-0061330

### SUMMARY OF THE INVENTION

An aspect of the present invention provides an LED driving device capable of being compatible with a fluorescent lamp ballast and securing initial starting of the fluorescent lamp ballast, and a power supply device including the same.

According to an aspect of the present invention, there is provided an LED driving device including: an input unit acquiring ballast output voltage; an LED driver driven based on the ballast output voltage; and a limiting unit limiting the ballast output voltage applied to the LED driver.

The LED driver may output a gate driving signal.

The limiting unit may apply the ballast output voltage to the LED driver when the ballast output voltage exceeds a preset voltage.

The limiting unit may delay time required to apply the ballast output voltage to the LED driver by a predetermined period of time.

The limiting unit may include a zener diode and a resistor element, and an anode of the zener diode is connected to the input unit and a cathode of the zener diode is connected to the resistor element.

The limiting unit may include: a voltage measuring unit measuring the ballast output voltage; and switching unit switching a connection between the input unit and the LED driver based on the output voltage measured by the voltage measuring unit.

The switching unit may connect the input unit and the LED driver when the output voltage measured by the voltage measuring unit exceeds a preset voltage.

According to another aspect of the present invention, there is provided a power supply device, including: an inverter converting input power into preset alternating current (AC) power; and a converter rectifying the AC power from the inverter, switching the rectified power and converting the rectified AC power into direct current (DC) power, and limiting the DC power applied to an LED driver.

The converter may include: a rectifying unit rectifying the AC power from the inverter; a converting unit switching the power rectified by the rectifying unit according to a control and converting the AC power into the DC power; and a limiting unit limiting the DC power applied to the LED driver.

The LED driver may output a gate driving signal.

The limiting unit may apply the DC power to the LED driver when a voltage of the DC power exceeds a preset voltage.

The limiting unit may delay time required to apply the DC power to the LED driver by a predetermined period of time.

The limiting unit may include a zener diode and a resistor element, and an anode of the zener diode is connected to an input unit and a cathode of the zener diode is connected to the resistor element.

The limiting unit may include a voltage measuring unit measuring the voltage of the DC power; and a switching unit switching a connection between the input unit and the LED driver based on the voltage measured by the voltage measuring unit.

The switching unit may connect the input unit and the LED driver when the voltage measured by the voltage measuring unit exceeds a preset voltage.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a configuration diagram schematically illustrating a power supply device according to an embodiment of the present invention;
FIGS. 2A through 2E are circuit diagrams schematically illustrating examples of a rectifying unit adopted in the power supply device according to the embodiment of the present invention;
FIG. 3 is a diagram illustrating an LED driving device according to an embodiment of the present invention;
FIG. 4 is a diagram illustrating an LED driving device according to another embodiment of the present invention, and FIG. 4A is a circuit diagram of the LED driving device and FIG. 4B is a diagram illustrating a signal waveform applied to the LED driving device;
FIG. 5 is a diagram illustrating an LED driving device according to another embodiment of the present invention and FIG. 5A is a circuit diagram of the LED driving device and FIG. 5B is a diagram illustrating a signal waveform applied to the LED driving device; and
FIGS. 6 and 7 are diagrams illustrating experimental results obtained by applying the LED driving device according to the embodiment of the present invention to the related art fluorescent lamp ballast.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

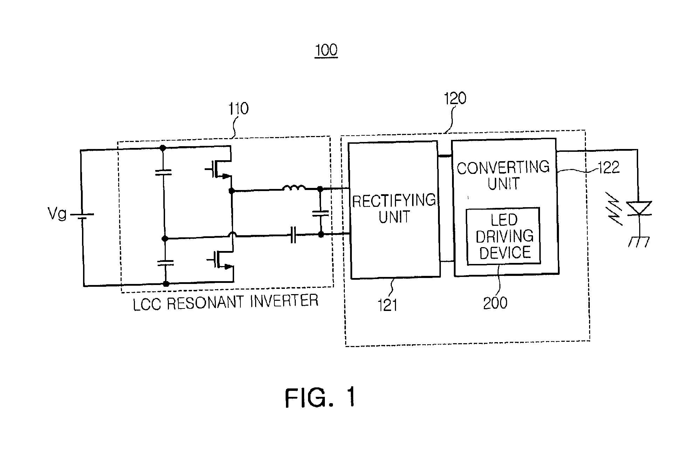

FIG. 1 is a configuration diagram schematically illustrating a power supply device according to an embodiment of the present invention.

Referring to FIG. 1, a power supply device 100 according to an embodiment of the present invention may include an inverter 110 and a converter 120.

The inverter 110 may convert input power into alternating current (AC) power and specifically, may be a resonant inverter, more specifically, an inductor -capacitor-capacitor (LCC) resonant inverter.

The inverter 110 may be adopted as a fluorescent lamp ballast.

The converter 120 may rectify the AC power from the inverter 110 and then convert the rectified AC power into direct current (DC) power.

That is, the converter 120 may supply the DC power to a lighting element, more specifically, at least one light emitting diode (LED) to drive the LED.

Therefore, the converter 120 may be coupled to the inverter 110 previously mounted on a wall surface or a ceiling or a fluorescent lamp ballast to drive the LED. Therefore, the fluorescent lamp ballast may be coupled to the existing lighting circuit without the replacement thereof to thereby easily drive the LED.

However, the inverter 110 (fluorescent lamp ballast) may be optimized for the fluorescent lamp to cause a power imbalance between the inverter 110 and the converter 120.

To this end, the converter 120 may include a rectifying unit 121 that rectifies the AC power of the inverter 110 and a converting unit 122 that switches the rectified power according to a control signal and converts the switched power into the DC power.

Meanwhile, according to the embodiment of the present invention, the converting unit 122 may include an LED driving device 200.

The LED driving device 200 may acquire ballast output voltage and output a gate driving signal controlling a driving of the LED.

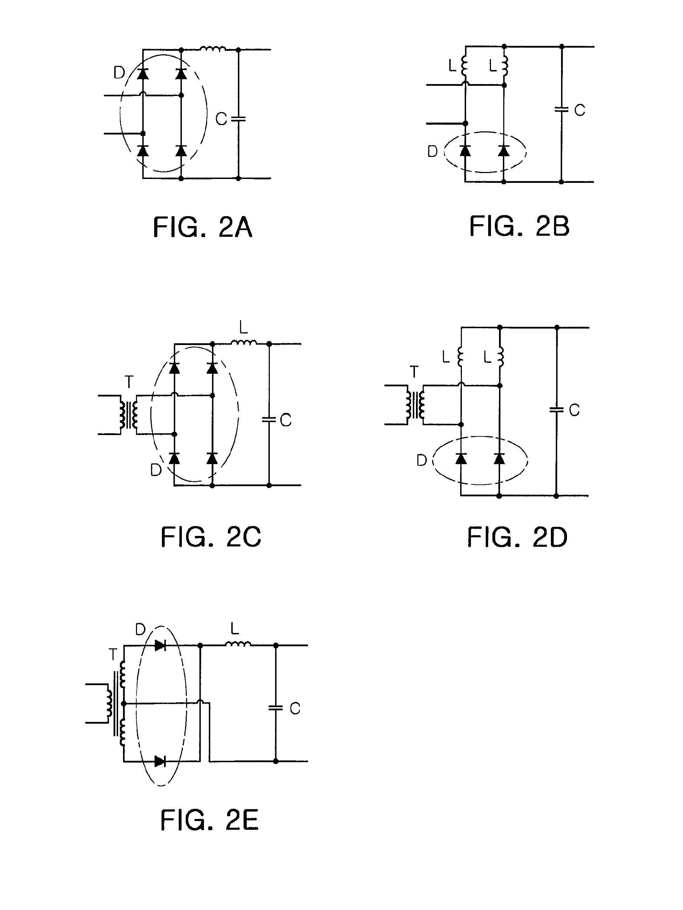

FIGS. 2A through 2E are circuit diagrams schematically illustrating examples of a rectifying unit adopted in the power supply device according to the embodiment of the present invention.

Referring to FIGS. 2A through 2E, the rectifying unit 111 adopted in the power supply device according to the embodiment of the present invention may be a non-isolated full wave rectifying or half wave rectifying circuit as illustrated in FIGS. 2A and 2B and may be a full wave or half wave rectifying circuit through an isolated transformer T as illustrated in FIGS. 2C to 2E.

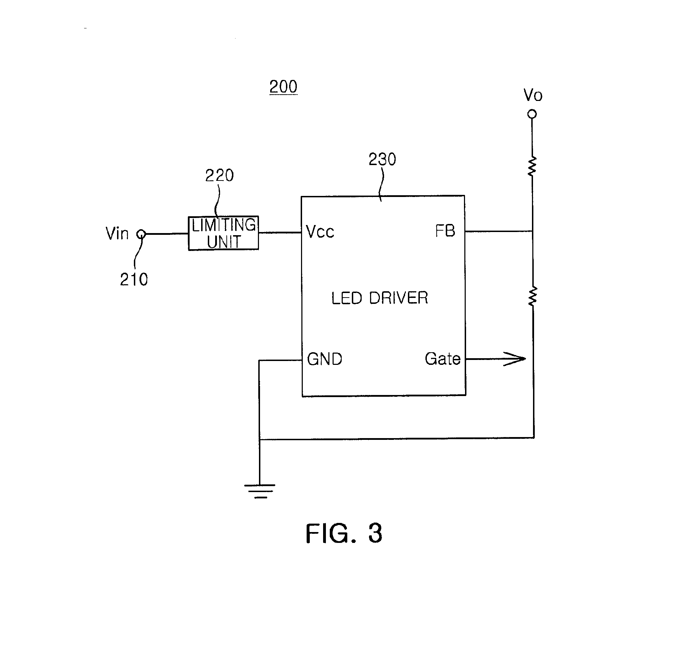

FIG. 3 is a diagram illustrating an LED driving device according to an embodiment of the present invention.

Referring to FIG. 3, the LED driving device 200 may include an input unit 210, a limiting unit 220, and an LED driver 230.

The input unit 210 may acquire output voltage from the inverter 110 or the fluorescent lamp ballast.

The LED driver 230 may be driven based on the ballast output voltage that is acquired through the input unit 210. For example, the LED driver may output the gate driving signal. The gate driving signal may be a signal for controlling the driving of the LED, and a detailed content thereof is apparent to those skilled in the art and will therefore be omitted.

The limiting unit 220 may limit the voltage applied to the LED driver 230 from the input unit 210.

For example, the limiting unit 220 may limit the ballast output voltage. In detail, the limiting unit 220 may apply the ballast output voltage to the LED driver when the ballast output voltage exceeds a preset voltage. When the ballast output voltage is a preset voltage or less, the limiting unit 220 may limit the ballast output voltage to being applied to the LED driver.

Further, the limiting unit 220 may delay the time required to apply the ballast output voltage to the LED driver by a predetermined period of time. For example, the limiting unit 220 may apply the ballast output voltage to the LED driver after a predetermined period of time has elapsed subsequently to the input unit 210 acquiring the ballast output voltage.

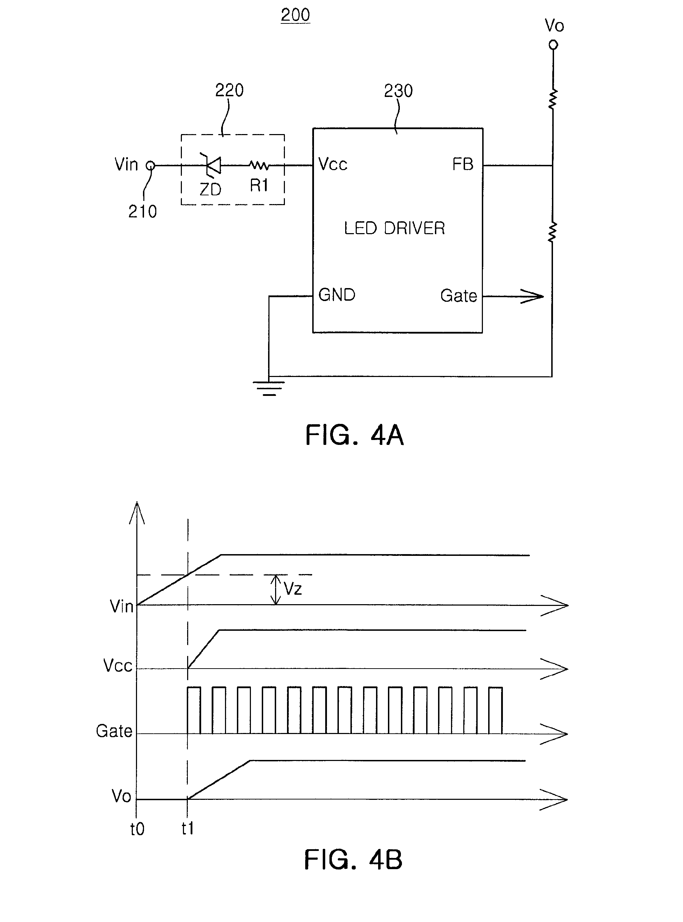

FIG. 4 is a diagram illustrating an LED driving device according to another embodiment of the present invention and FIG. 4A is a circuit diagram of the LED driving device and FIG. 4B is a diagram illustrating a signal waveform applied to the LED driving device.

Referring to FIG. 4A, the LED driving device 200 may include the input unit 210, the limiting unit 220, and the LED driver 230. Herein, the input unit 210 and the LED driver 230 are the same as those described in the foregoing embodiment, and therefore detailed descriptions thereof will be omitted.

The limiting unit 220 may include a zener diode ZD and a resistor element R1. Herein, an anode of the zener diode ZD may be connected to the input unit. Further, a cathode of the zener diode ZD may be connected to a voltage applying terminal Vcc of the LED driver via the resistor element R1 via the resistor element R1.

At the time of the initial starting of the fluorescent lamp ballast, the fluorescent lamp ballast initiates normal operations only when an output load is maintained in an open state for a predetermined period of time, and otherwise, the operations of the fluorescent lamp ballast may be recognized as being abnormal.

Therefore, at the time of the initial starting of the LED driving device, it may be preferable that the LED driving device connected to the fluorescent lamp ballast does not consume power for a predetermined period of time.

Referring to FIG. 4B, the ballast output voltage is applied to the input unit 210 and the applied voltage may be increased (period of t0 to t1).

Meanwhile, current may not be conducted through the zener diode ZD with a predetermined voltage Vz or less. That is, current may be conducted through the zener diode ZD within the period t0 to t1.

Therefore, the voltage is not applied to the voltage applying terminal Vcc of the LED driver within the period t0 to t1 and the LED driver does not consume power.

When the voltage applied to the input unit 210 exceeds the preset voltage Vz due to the zener diode ZD, current may be conducted through the zener diode ZD. Therefore, voltage is applied to the voltage applying terminal Vcc of the LED driver in a period after time t1. Further, the LED driver may output a gate driving signal Gate in the period (period after time t1).

According to the embodiment of the present invention, the limiting unit 220 may apply a ballast output voltage Vin to the LED driver when the ballast output voltage Vin exceeds the preset voltage Vz. That is, when the ballast output voltage Vin has a level equal to or less than the preset voltage Vz, the limiting unit 220 may limit the ballast output voltage to being applied to the LED driver.

Further, the limiting unit 220 may apply the ballast output voltage to the LED driver after a predetermined period of time t1 has elapsed subsequently to the input unit 210 acquiring the ballast output voltage.

Therefore, in the case in which the LED driving device according to the embodiment of the present invention is connected to the fluorescent lamp ballast, at the time of the initial starting of the fluorescent lamp ballast, the fluorescent lamp ballast recognizes that the output load is maintained in an open state for a predetermined period of time and therefore may initiate normal operations.

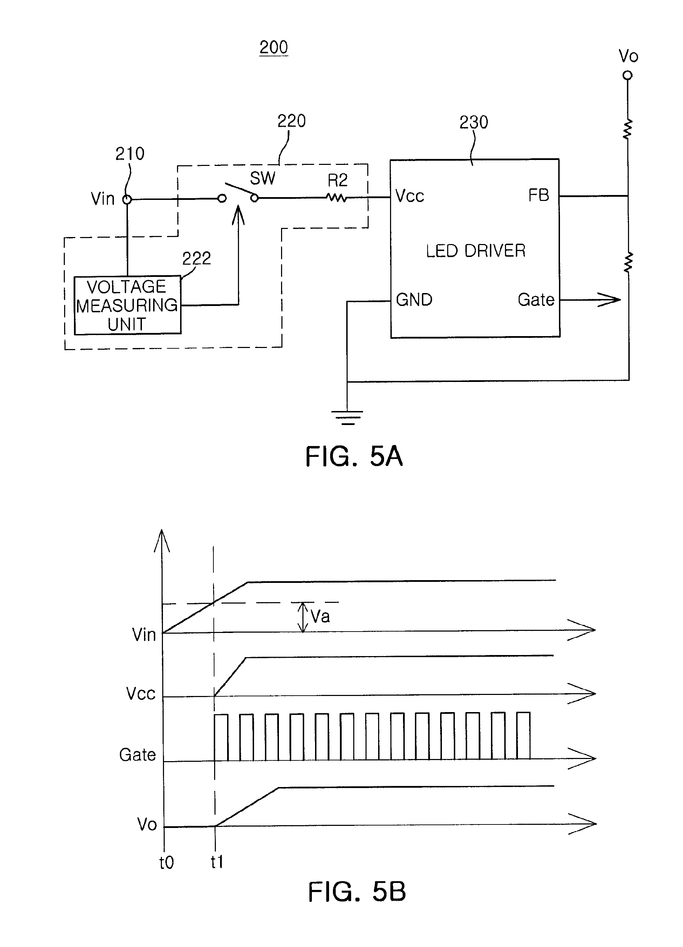

FIG. 5 is a diagram illustrating an LED driving device according to another embodiment of the present invention and FIG. 5A is a circuit diagram of the LED driving device and FIG. 5B is a diagram illustrating a signal waveform applied to the LED driving device.

Referring to FIG. 5A, the LED driving device 200 may include the input unit 210, the limiting unit 220, and the LED driver 230. Herein, the input unit 210 and the LED driver 230 are the same as those in the foregoing embodiment, and therefore detailed descriptions thereof will be omitted.

The limiting unit 220 may include a voltage measuring unit 222 that measures the ballast output voltage, a switching unit SW that switches the connection between the input unit 210 and the LED driver 230 based on the output voltage measured by the voltage measuring unit 222, and a resistor element that is disposed between the switching unit SW and the LED driver 230.

At the time of the initial starting of the fluorescent lamp ballast, the fluorescent lamp ballast initiates normal operations only when an output load is maintained in an open state for a predetermined period of time, and otherwise the operations of the fluorescent lamp ballast may be recognized as being abnormal.

Therefore, at the time of the initial starting of the LED driving device, it may be preferable that the LED driving device connected to the fluorescent lamp ballast does not consume power for a predetermined period of time.

For example, after the ballast output voltage is applied to the input unit 210, the switching unit SW may disconnect the input unit 210 from the LED driver 230 for a predetermined period of time. The reason is that at the time of the initial starting of the fluorescent lamp ballast, the fluorescent lamp ballast recognizes that the output load is maintained in an open state for a predetermined period of time, and therefore may initiate normal operations.

Meanwhile, the switching unit SW may include at least one of a transistor, an insulated gate bipolar transistor (IGBT), a metal oxide semiconductor field-effect transistor (MOS-FET), a junction gate field-effect transistor (JFET), a depletion field-effect transistor (FET), an enhancement FET, and a bipolar junction transistor (BJT).

When the measured voltage has a level equal to or less than a preset voltage Va, the voltage measuring unit 222 may transmit a turn off signal to the switching unit SW to turn off the switching unit SW. Further, when the measured voltage exceeds the preset voltage Va, the voltage measuring unit 222 may transmit a turn on signal to the switching unit SW to turn on the switching unit SW.

Referring to FIG. 4B, the ballast output voltage is applied to the input unit 210 and the applied voltage may be increased (period of t0 to t1).

Meanwhile, when the voltage applied to the input unit 210 is equal to or less than the preset voltage Va, the switching unit SW is maintained in a turn off state.

Therefore, the voltage is not applied to the voltage applying terminal Vcc of the LED driver within the period t0 to t1 and the LED driver does not consume power.

When the voltage applied to the input unit 210 exceeds the preset voltage Va, the switching unit SW may be turned on. Therefore, voltage is applied to the voltage applying terminal Vcc of the LED driver in a period after time t1. Further, the LED driver may output the gate driving signal Gate in the period (period after time t1).

According to the embodiment of the present invention, the limiting unit 220 may apply the ballast output voltage Vin to the LED driver when the ballast output voltage Vin exceeds the preset voltage Va. That is, when the ballast output voltage Vin is equal to or less than the preset voltage Va, the limiting unit 220 may limit the ballast output voltage to being applied to the LED driver.

Further, the limiting unit 220 may apply the ballast output voltage to the LED driver a predetermined period of time t1 has elapsed subsequently to the input unit 210 acquiring the ballast output voltage.

Therefore, in the case in which the LED driving device according to the embodiment of the present invention is connected to the fluorescent lamp ballast, at the time of the initial starting of the fluorescent lamp ballast, the fluorescent lamp ballast recognizes that the output load is maintained in an open state for a predetermined period of time and therefore may initiate normal operations.

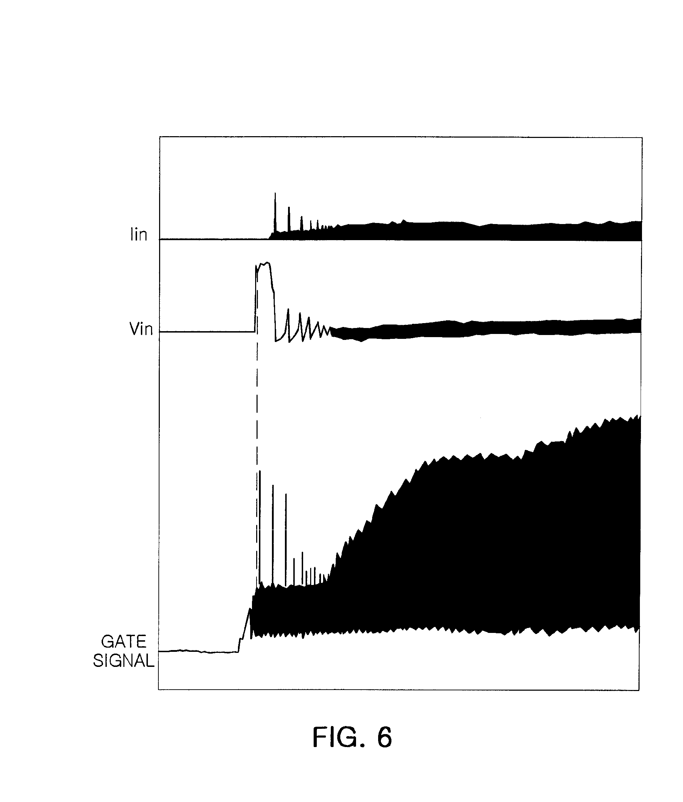

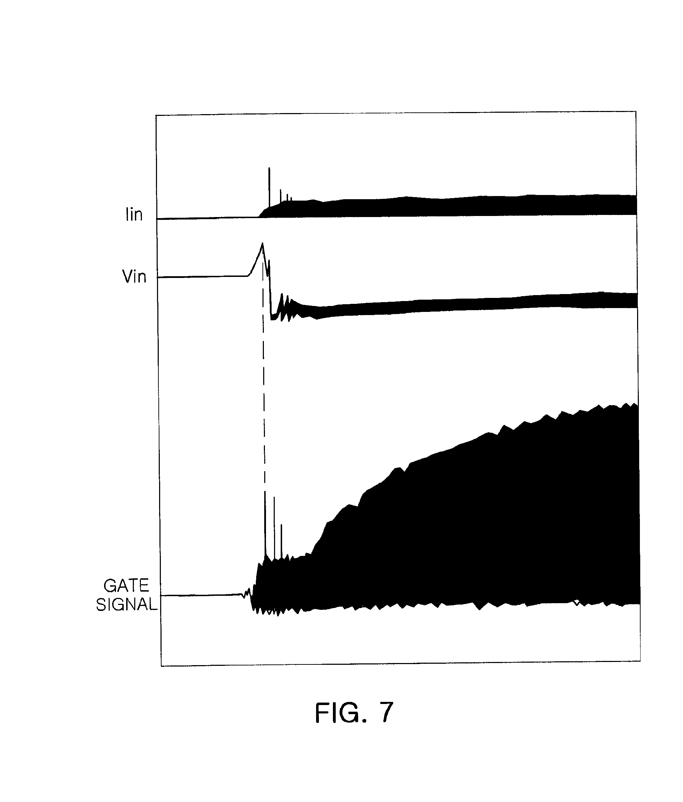

FIGS. 6 and 7 are diagrams illustrating experimental results obtained by applying the LED driving device according to the embodiment of the present invention to the existing fluorescent lamp ballast.

Referring to FIGS. 6 and 7, when the ballast output voltage Vin exceeds a predetermined value, it may be confirmed that the gate driving signal is output.

As set forth above, according to the exemplary embodiments of the present invention, the LED driving device capable of being compatible with the fluorescent lamp ballast and securing the initial starting of the fluorescent lamp ballast, and the power supply device including the same can be provided.

While the present invention has been shown and described in connection with the embodiments, it will be apparent to those skilled in the art that modifications and variations can be made without departing from the spirit and scope of the invention as defined by the appended claims.

## Claims

1. An LED driving device, comprising:
an input unit acquiring ballast output voltage;
an LED driver driven based on the ballast output voltage;
and
a limiting unit limiting the ballast output voltage applied to the LED driver.

2. The LED driving device of claim 1, wherein the LED driver outputs a gate driving signal.

3. The LED driving device of claim 1, wherein the limiting unit applies the ballast output voltage to the LED driver when the ballast output voltage exceeds a preset voltage.

4. The LED driving device of claim 1, wherein the limiting unit delays time required to apply the ballast output voltage to the LED driver by a predetermined period of time.

5. The LED driving device of claim 1, wherein the limiting unit includes:
a zener diode and a resistor element, and
an anode of the zener diode is connected to the input unit and a cathode of the zener diode is connected to the resistor element.

6. The LED driving device of claim 1, wherein the limiting unit includes:
a voltage measuring unit measuring the ballast output voltage; and
a switching unit switching a connection between the input unit and the LED driver based on the output voltage measured by the voltage measuring unit.

7. The LED driving device of claim 6, wherein the switching unit connects the input unit and the LED driver when the output voltage measured by the voltage measuring unit exceeds a preset voltage.

8. A power supply device, comprising:
an inverter converting input power into preset alternating current (AC) power; and
a converter rectifying the AC power from the inverter, switching the rectified power and converting the rectified AC power into direct current (DC) power, and limiting the DC power applied to an LED driver.

9. The power supply device of claim 8, wherein the converter includes:
a rectifying unit rectifying the AC power from the inverter;
a converting unit switching the power rectified by the rectifying unit according to a control and converting the AC power into the DC power; and
a limiting unit limiting the DC power applied to the LED driver.

10. The power supply device of claim 9, wherein the LED driver outputs a gate driving signal.

11. The power supply device of claim 9, wherein the limiting unit applies the DC power to the LED driver when a voltage of the DC power exceeds a preset voltage.

12. The power supply device of claim 9, wherein the limiting unit delays time required to apply the DC power to the LED driver by a predetermined period of time.

13. The power supply device of claim 9, wherein the limiting unit includes:
a zener diode and a resistor element, and
an anode of the zener diode is connected to an input unit and a cathode of the zener diode is connected to the resistor element.

14. The power supply device of claim 9, wherein the limiting unit includes:
a voltage measuring unit measuring the voltage of the DC power; and
a switching unit switching a connection between the input unit and the LED driver based on the voltage measured by the voltage measuring unit.

15. The power supply device of claim 14, wherein the switching unit connects the input unit and the LED driver when the voltage measured by the voltage measuring unit exceeds a preset voltage.
